(19) Europäisches Patentamt
European Patent Office
Office européen des brevets

(11) **EP 3 510 685 B1**

(12) **FASCICULE DE BREVET EUROPEEN**

(45) Date de publication et mention
de la délivrance du brevet:
**08.01.2020 Bulletin 2020/02**

(21) Numéro de dépôt: **17804494.7**

(22) Date de dépôt: **15.11.2017**

(51) Int Cl.:
***H02J 7/00*** *(2006.01)*

(86) Numéro de dépôt international:
**PCT/EP2017/079251**

(87) Numéro de publication internationale:
**WO 2018/091491 (24.05.2018 Gazette 2018/21)**

(54) **SYSTÈME D'ÉQUILIBRAGE LOCAL ANALOGIQUE POUR UN ENSEMBLE DE DISPOSITIFS DE STOCKAGE D'ÉNERGIE ÉLECTRIQUE PAR EFFET CAPACITIF, MODULE DE STOCKAGE RECHARGEABLE, VÉHICULE DE TRANSPORT ET INSTALLATION ÉLECTRIQUES COMPRENANT UN TEL SYSTÈME**

LOKALES ANALOGES AUSGLEICHSSYSTEM FÜR EINE GRUPPE VON VORRICHTUNGEN ZUR SPEICHERUNG VON ELEKTRISCHER ENERGIE MITTELS EINES KAPAZITIVEN EFFEKTS, ELEKTRISCHE EINRICHTUNG, TRANSPORTFAHRZEUG UND WIEDERAUFLADBARES SPEICHERMODUL MIT SOLCH EINEM SYSTEM

LOCAL ANALOGUE EQUALISATION SYSTEM FOR A SET OF DEVICES FOR STORING ELECTRICAL POWER VIA A CAPACITIVE EFFECT, ELECTRICAL INSTALLATION, TRANSPORT VEHICLE AND RECHARGEABLE STORAGE MODULE COMPRISING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2016 FR 1661244**

(43) Date de publication de la demande:
**17.07.2019 Bulletin 2019/29**

(73) Titulaire: **Blue Solutions**
**29500 Ergué Gabéric (FR)**

(72) Inventeur: **DEPOND, Jean-Michel**
**29000 Quimper (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**EP-A1- 2 490 315     US-A1- 2003 020 435**
**US-A1- 2016 036 248**

EP 3 510 685 B1

## Description

La présente invention concerne un système d'équilibrage analogique pour un ensemble de dispositifs de stockage par effet capacitif reliés entre eux en série. Elle concerne également un module de stockage d'énergie électrique rechargeable, un véhicule de transport électrique ou hybride et une installation d'alimentation électrique mettant en œuvre un tel système.

Le domaine de l'invention est le domaine des systèmes d'équilibrage de supercondensateurs reliés en série.

## Etat de la technique

Un supercondensateur réalise un stockage d'énergie électrique par effet capacitif. La principale limitation d'un supercondensateur est de ne fonctionner qu'à très basse tension. Pour atteindre la tension de fonctionnement souhaitée, les supercondensateurs sont mis en série dans un module de stockage d'énergie électrique rechargeable.

Cependant, du fait des différences de fabrication ou des différences de vieillissement, les supercondensateurs d'un même module de stockage ne se chargent que rarement à la même vitesse. Pour assurer une plus grande homogénéité de tension aux bornes des supercondensateurs en série, un système d'équilibrage est prévu, sous une forme analogique pour des questions de coût, de fiabilité, de faisabilité et de robustesse.

Ce système d'équilibrage analogique prévoit, lors d'une phase de charge, de dériver au moins une partie du courant pour chaque supercondensateur, de manière individuelle, lorsque la tension à ses bornes dépasse une tension prédéterminée, dite tension d'équilibrage. A la fin de la phase de charge, si la tension d'équilibrage est dépassée pour l'ensemble des supercondensateurs, ce qui est généralement le cas, tous les supercondensateurs sont donc dérivés.

Ainsi, lorsque la phase de charge n'est pas immédiatement suivie d'une phase de décharge, mais d'une phase de maintien en tension ou d'une phase de repos, chaque supercondensateur reste dérivé et se décharge dans le circuit de dérivation, tant que la tension à ses bornes est supérieure à la tension d'équilibrage. Autrement dit, pendant une phase de maintien en tension, ou de repos, séparant une phase de charge d'une phase de décharge, les supercondensateurs se déchargent dans le circuit de dérivation alors qu'ils ne sont pas utilisés. De ce fait une perte d'énergie se produit, compensée dans le cas d'une phase de maintien en tension, non compensée dans le cas d'une phase de repos, ce qui est coûteux dans tous les cas, diminue l'efficacité et l'autonomie des supercondensateurs, et donc du module de stockage.

Un but de la présente invention est de remédier à ces inconvénients. Un autre but de l'invention est de proposer un système d'équilibrage plus efficace pour un ensemble de dispositifs de stockage par effet capacitif reliés entre eux en série.

Il est aussi un but de l'invention de proposer un système d'équilibrage pour un ensemble de dispositifs de stockage par effet capacitif en série permettant de diminuer, voire annuler, les pertes d'énergie, et d'augmenter l'efficacité et l'autonomie dudit ensemble.

On notera que le document US 2016/036248 A1 décrit le préambule de la revendication indépendante 1. Le document US 2003/020435 A1 décrit également le préambule de la revendication indépendante 1.

## Exposé de l'invention

L'invention permet d'atteindre au moins l'un de ces buts par un système d'équilibrage analogique d'un ensemble de stockage d'énergie électrique rechargeable comprenant une pluralité de dispositifs de stockage par effet capacitif reliés entre eux en série, ledit système comprenant, pour chaque dispositif de stockage, un dispositif d'équilibrage comportant :

- un circuit de dérivation dudit dispositif de stockage, commandable entre un état fermé et un état ouvert, et
- un comparateur de tension, dit premier comparateur, agencé pour commander ledit circuit de dérivation, dans un état ouvert ou fermé, en fonction de la tension aux bornes dudit dispositif de stockage et d'une tension prédéterminée, dite tension d'équilibrage, notée $V_{eq}$ dans la suite ;

ledit système étant caractérisé en ce qu'il comprend en outre, pour chaque dispositif de stockage, un autre comparateur de tension, dit deuxième comparateur, agencé pour commander un état ouvert, ou fermé, du circuit de dérivation dudit de dispositif de stockage, en fonction :

- de la tension aux bornes dudit dispositif de stockage, et
- d'une tension prédéterminée, dite tension de décommutation, représentative d'un état fermé de la majorité des, ou de tous les, circuits de dérivation, et notée $V_{dec}$ dans la suite.

En particulier, $V_{dec} > V_{eq}$.

Ainsi, le système selon l'invention prévoit de décommuter, c'est-à-dire d'ouvrir, le circuit de dérivation de chaque dispositif de stockage, lorsque la majorité ou la totalité des circuits de dérivation sont dans un état commuté, c'est-à-dire un état fermé. Ainsi, le système selon l'invention permet d'éviter que les dispositifs de stockage restent dérivés, par des circuits de dérivation de courant, après une phase de charge. De ce fait, le système selon l'invention permet d'éviter que, entre une phase de charge et une phase de décharge, les dispositifs de stockage se déchargent dans les circuits de dérivation, et en particulier dans des résistances de dérivation desdits circuits de dérivation.

Par conséquent, le système selon l'invention permet de réaliser un équilibrage plus efficace, de diminuer les pertes d'énergie, et d'augmenter l'efficacité et l'autonomie de l'ensemble de stockage.

De plus, la commande du circuit de dérivation de chaque dispositif de stockage est réalisée de manière individuelle par un deuxième comparateur qui est dédié audit dispositif de stockage. Par conséquent, le système selon l'invention présente une grande flexibilité mais aussi une robustesse accrue. En effet, un dysfonctionnement d'un deuxième comparateur associé à un dispositif de stockage n'aura aucun impact sur l'équilibrage d'un autre dispositif de stockage.

Dans la présente demande, on entend par « dispositif de stockage par effet capacitif », également appelé « dispositif de stockage », un dispositif comprenant, ou formé par, un ou plusieurs supercondensateurs reliés entre eux en série ou en parallèle.

Dans la plupart des cas, mais de manière non limitative, les dispositifs de stockage par effet capacitif comprennent chacun un seul supercondensateur, et présentent une même tension d'équilibrage et une même tension de décommutation.

Suivant une configuration, le premier comparateur reçoit directement la tension $V_i$ aux bornes du dispositif de stockage. Dans ce cas, le premier comparateur compare directement la tension $V_i$ à la tension d'équilibrage $V_{eq}$.

Alternativement, un premier diviseur de tension peut être utilisé pour adapter la tension $V_i$ en entrée du premier comparateur. Le premier comparateur reçoit alors une tension d'entrée $V_i^{E1}$ telle que $V_i^{E1} = V_i/D_i^1$, avec $D_i^1$ le coefficient de division appliqué par le premier diviseur de tension. Dans ce cas, le premier comparateur compare la tension $V_i^{E1}$ à une première tension, dite de référence, notée $V_{ref1}$ choisie telle que $V_{ref1} = V_{eq}/D_i^1$.

Suivant une configuration, le deuxième comparateur reçoit directement la tension $V_i$ aux bornes du dispositif de stockage. Dans ce cas, il compare directement la tension $V_i$ à la tension de décommutation $V_{dec}$.

Alternativement, un deuxième diviseur de tension peut être utilisé pour adapter la tension $V_i$ en entrée du deuxième comparateur. Le deuxième comparateur reçoit alors une tension d'entrée $V_i^{E2}$ telle que $V_i^{E2} = V_i/D_i^2$, avec $D_i^2$ le coefficient de division appliqué par le deuxième diviseur de tension. Dans ce cas, le deuxième comparateur compare la tension $V_1^{E2}$ à une deuxième tension, dite de référence, notée $V_{ref2}$ choisie telle que $V_{ref2} = V_{dec}/D_i^2$.

Dans une configuration particulièrement avantageuse, les premier et deuxième diviseurs de tension peuvent être dimensionnés de sorte que :

$$V_{ref1} = V_{ref2} = V_{ref}.$$

Dans ce cas, on a :

$$V_{dec}/D_i^2 = V_{eq}/D_i^1,$$

$$V_{dec}/V_{eq} = D_i^2/D_i^1.$$

Suivant un exemple de réalisation non limitatif, chaque diviseur de tension peut être réalisé par des ponts de résistances.

Par ailleurs, en considérant, que les capacités de chaque dispositif de stockage à équilibrer sont comprises entre une valeur minimum $C_{min}$ et une valeur maximum $C_{max}$, on peut prendre $V_{dec}$ tel que :

$$\frac{V_{dec}}{V_{eq}} = \frac{C_{max}}{C_{min}}$$

De façon plus générale, on peut fixer une plage de variation standard des capacités [$C = \overline{C}(1 \pm \Delta C)$ avec $\Delta C \ll 1$, $\Delta C \leq 10\%$ typiquement] et fixer $V_{dec}$ tel que :

$$V_{dec} = \frac{1+\Delta C}{1-\Delta C} V_{eq} \approx (1+2\,\Delta C)\,V_{eq}$$

Par ailleurs, $V_{dec}$ doit être inférieure à la tension maximale, notée $V_{max}$, de fonctionnement du dispositif de stockage, en particulier donnée par l'application.

Suivant une caractéristique particulièrement avantageuse, pour au moins un, en particulier chaque, dispositif de stockage, l'un au moins des premier et deuxième comparateurs peut être référencé aux potentiels aux bornes dudit dispositif de stockage, et être configuré pour fournir en sortie :

- dans un premier état : le plus petit potentiel, notée $V_i^-$, aux bornes dudit dispositif de stockage ; et
- dans un deuxième état : le plus grand potentiel, notée $V_i^+$, aux bornes dudit dispositif de stockage.

Ainsi, le(s) comparateur(s) s'adapte(nt) à la variation, dans le temps, de la tension aux bornes du dispositif de stockage, ce qui permet de réaliser un équilibrage plus efficace et plus précis.

De plus, il n'est pas nécessaire de prévoir une source de tension additionnelle pour référencer le(s) comparateur(s), ce qui diminue le coût et l'encombrement du système selon l'invention.

Enfin, le(s) comparateur(s) fonctionne(nt) dans une plage de tensions qui ne dépasse pas la tension maximale aux bornes de chaque dispositif de stockage, ce qui permet l'utilisation de composants moins coûteux et moins encombrants comparés aux composants fonctionnant à très haute tension.

Avantageusement, le système selon l'invention peut comprendre pour au moins un, en particulier chaque, dispositif de stockage :

- un diviseur de tension, dit premier diviseur de tension, fournissant, au premier comparateur, une première tension d'entrée proportionnelle et inférieure à ladite tension aux bornes dudit dispositif de stockage ; et/ou
- un diviseur de tension, dit deuxième diviseur de tension, fournissant, au deuxième comparateur, une deuxième tension d'entrée proportionnelle et inférieure à ladite tension aux bornes dudit dispositif de stockage.

Un diviseur de tension permet d'adapter, en particulier de réduire, la tension aux bornes du dispositif de stockage, de sorte à utiliser une source de tension existante sur le marché pour la comparaison réalisée par le premier comparateur, respectivement le deuxième comparateur.

En effet, d'un point de vue pratique, les sources de tension en électronique analogique ont des valeurs déterminées et fixes. Elles ne correspondent donc pas nécessairement à la valeur de la tension d'équilibrage souhaitée $V_{eq}$, respectivement à la valeur de la tension de décommutation souhaitée $V_{dec}$.

Avantageusement, pour au moins un dispositif de stockage, le (ou les) diviseur(s) de tension peu(ven)t être dimensionné(s) de sorte que, les premier et deuxième comparateurs réalisent une comparaison des tensions d'entrées à une même tension de référence, en particulier fournie par une même et unique source.

Ainsi, le coût et l'encombrement du système d'équilibrage sont diminués.

Dans ce cas, le ou les diviseurs de tension peuvent être choisis de sorte que :

$$V_{dec}/V_{eq} = D_i^2/D_i^1$$

Avec $D_i^1$, respectivement $D_i^2$, le coefficient appliqué par le premier diviseur de tension, respectivement par le deuxième diviseur de tension.

Dans toutes les applications, $V_{dec} > V_{eq}$. Ainsi, dans un mode de réalisation particulier, seul le deuxième diviseur de tension peut être utilisé, avec un coefficient $D_i^2$ tel que :

$$V_{dec}/V_{eq} = D_i^2$$

De plus, l'un au moins, et en particulier chacun, des premier et deuxième comparateurs, peut être un comparateur à hystérésis.

Un tel comparateur à hystérésis permet d'éviter le phénomène de bagotage du signal de commande fourni par ledit comparateur.

Suivant un premier exemple de réalisation, au moins un, en particulier chaque, circuit de dérivation peut comprendre deux commutateurs, en série dans ledit circuit de dérivation, l'un commandé en fonction de la tension fournie par le premier comparateur et l'autre commandé en fonction de la tension fournie par le deuxième comparateur.

Alternativement, ou en plus, au moins un, en particulier chaque, circuit de dérivation peut comprendre un unique commutateur, le dispositif d'équilibrage comprenant en outre un moyen de commande dudit unique commutateur, en fonction des tensions fournies par les premier et deuxième comparateurs.

Ainsi, le coût, la consommation électrique et l'encombrement du système selon l'invention sont diminués.

Suivant un premier exemple de réalisation, pour au moins un, en particulier chaque dispositif d'équilibrage, le moyen de commande du commutateur unique peut comprendre :

- un transistor bloqué par défaut, par exemple un transistor bipolaire de type NPN, en particulier lorsque le deuxième comparateur est un comparateur inverseur, ou

- un transistor passant par défaut, par exemple un transistor bipolaire de type PNP, en particulier lorsque le deuxième comparateur est un comparateur non-inverseur.

Dans le cas où un transistor bipolaire est utilisé alors la base dudit transistor bipolaire est reliée au deuxième comparateur, le collecteur au premier comparateur et l'émetteur à l'unique commutateur.

Dans ce cas, la tension de l'émetteur du transistor, notée $V_i^c$, peut être utilisée pour commander le commutateur unique associé au dispositif de stockage.

Suivant une caractéristique particulièrement avantageuse, le système selon l'invention peut en outre comprendre un dispositif de surveillance du fonctionnement dudit système d'équilibrage, et éventuellement signaler un défaut de fonctionnement dudit système.

Suivant un premier mode de réalisation, le dispositif de surveillance peut réaliser une surveillance du fonctionnement dudit système d'équilibrage en fonction des tensions fournies par les deuxièmes comparateurs.

Un tel dispositif peut être agencé pour réaliser une somme pondérée de toutes les tensions fournies par les deuxièmes comparateurs de tous les dispositif de stockage et comparer la somme pondérée obtenue à une première tension de seuil, par un comparateur de tension par exemple.

Cette première tension de seuil peut être la tension V aux bornes de l'ensemble de stockage, c'est-à-dire $V = V_n^+ - V_1^-$.

Il est également possible de prendre en compte, dans la première tension de seuil, une tension 5V représentant une marge de sécurité. Dans ce cas, la tension de seuil peut être égale à : V-5V.

Alternativement, la tension 5V représentant une marge de sécurité peut être ajoutée à la somme pondérée.

Suivant un deuxième mode de réalisation, et lorsque le circuit de dérivation de chaque dispositif d'équilibrage comprend un unique commutateur commandé par un moyen de commande, le dispositif de surveillance peut réaliser une surveillance du fonctionnement dudit système d'équilibrage en fonction des tensions de commande desdits commutateurs uniques de tous les dispositifs d'équilibrage.

Un tel dispositif peut être agencé pour réaliser une somme pondérée de toutes les tensions de commande et comparer la somme obtenue à une deuxième tension de seuil, par un comparateur de tension par exemple.

Cette deuxième tension de seuil peut être la tension V aux bornes de l'ensemble de stockage, c'est-à-dire $V = V_n^+ - V_1^-$.

Il est également possible de prendre en compte, dans la deuxième tension de seuil, une tension 5V représentant une marge de sécurité. Dans ce cas, la tension de seuil peut être égale à : V-5V.

Alternativement, la tension 5V représentant une marge de sécurité peut être ajoutée à la somme pondérée.

Suivant un troisième mode de réalisation, et lorsque le circuit de dérivation de chaque dispositif d'équilibrage comprend un unique commutateur commandé par un moyen de commande dudit unique commutateur, le dispositif de surveillance du fonctionnement dudit système peut réaliser une surveillance en fonction :

- de la tension de commande dudit commutateur unique, et
- de la tension fournie par le premier comparateur ;

de chaque dispositif d'équilibrage.

En particulier, dans un exemple de réalisation nullement limitatif de ce troisième mode de réalisation, le dispositif de surveillance peut comprendre, pour chaque dispositif d'équilibrage :

- un commutateur commandable, dit troisième commutateur, et
- un comparateur, dit troisième comparateur, pour commander ledit troisième commutateur.

Tous les troisièmes commutateurs peuvent être reliés en série entre eux entre deux potentiels électriques différents, tels que par exemple les potentiels $V_1^-$ et $V_n^+$ aux bornes de l'ensemble de stockage.

Chaque troisième comparateur, associé à un dispositif d'équilibrage, réalise une comparaison :

- de la tension de commande du commutateur unique du dispositif d'équilibrage, et
- de la tension fournie par le premier comparateur dudit dispositif d'équilibrage ;

pour commander le troisième commutateur qui lui est associé, en fonction de ladite comparaison.

Chaque couple (troisième commutateur + troisième comparateur) associé à un dispositif d'équilibrage peut être configuré de sorte que le troisième commutateur est commandé dans un état fermé lorsque le commutateur unique dudit dispositif d'équilibrage passe dans un état fermé. En particulier :

- chaque 3ème comparateur peut être un comparateur inverseur, respectivement un comparateur non inverseur ; et
- chaque 3ème commutateur peut être un transistor bloqué par défaut, par exemple un transistor bipolaire de type NPN, respectivement un transistor passant par défaut, par exemple un transistor bipolaire de type PNP.

Suivant un autre aspect de la même invention, il est proposé un module de stockage d'énergie électrique rechargeable comprenant :

- au moins un ensemble de stockage d'énergie électrique rechargeable, comprenant, chacun, une pluralité de dispositifs de stockage d'énergie électrique par effet capacitif reliés entre eux en série au sein dudit ensemble, et
- pour au moins un, en particulier chaque, ensemble de stockage, un système d'équilibrage selon l'invention.

Le module de stockage d'énergie peut comprendre plusieurs ensembles de stockage.
Au moins deux, en particulier tous les, ensembles peuvent être disposés en série entre eux. Alternativement, ou en plus, au moins deux, en particulier tous les, ensembles peuvent être disposés en parallèle entre eux.
Au moins deux, en particulier tous les, ensembles peuvent comprendre un nombre identique, ou un nombre différent de dispositifs de stockage.
Suivant un autre aspect de la présente invention, il est proposé un véhicule de transport, hybride ou électrique, comprenant un ou plusieurs module(s) de stockage d'énergie électrique rechargeable(s) selon l'invention.
Par « véhicule de transport », on entend tout type de moyen de transport de personnes ou d'objets, tel qu'un bus, une voiture, un tram-bus, un bateau, un camion, un téléphérique, un ascenseur, un monte-charge, une grue, etc.
Suivant encore un autre aspect de la même invention, il est proposé une installation électrique comprenant un ou plusieurs module(s) de stockage d'énergie électrique rechargeable(s) selon l'invention.
Une telle installation électrique peut être une station de charge électrique pour véhicules de transport, électriques ou hybrides, ou une station d'alimentation électrique d'un bâtiment, d'un complexe ou d'un appareil électrique/électronique de communication.
Une telle installation électrique peut être une station de régulation ou de lissage, ou encore de stockage tampon, d'énergie électrique, par exemple fournie par un réseau électrique ou des moyens de production d'électricité. Une telle station de régulation ou de lissage permet de stocker de l'énergie électrique en surplus lors d'une période de faible consommation, respectivement de forte production, et de restituer l'énergie électrique stockée lors d'une période de forte consommation, respectivement faible production.
Avantageusement, l'installation selon l'invention peut comprendre un moyen de production d'énergie électrique à partir d'une source renouvelable, tel qu'au moins un panneau solaire et/ou au moins une éolienne et/ou au moins une hydrolienne.
L'énergie produite par un tel moyen peut être utilisée pour recharger au moins un module de stockage d'énergie électrique rechargeable.
Alternativement, ou en plus, au moins un module de stockage d'énergie électrique rechargeable peut être rechargé depuis le secteur.

**Description des figures et modes de réalisation**

D'autres avantages et caractéristiques apparaîtront à l'examen de la description détaillée de modes de réalisation nullement limitatifs, et des dessins annexés sur lesquels :

- les FIGURES 1a et 1b représentent des schémas de principe de deux exemples de réalisation d'un système d'équilibrage à résistance commandée selon l'état de la technique ;
- la FIGURE 2 est une représentation du schéma de principe d'un premier exemple de réalisation d'un système d'équilibrage à résistance commandée selon l'invention ;
- la FIGURE 3 est une représentation du schéma de principe d'un deuxième exemple de réalisation d'un système d'équilibrage à résistance commandée selon l'invention ;
- la FIGURE 4 est une représentation schématique d'un exemple de réalisation non limitatif d'un module de surveillance du fonctionnement d'un système selon l'invention ;

- la FIGURE 5 est une représentation schématique d'un autre exemple de réalisation non limitatif d'un module de surveillance du fonctionnement d'un système selon l'invention ;
- la FIGURE 6 est une représentation schématique d'un exemple de réalisation non limitatif d'un module de stockage selon l'invention ; et
- les FIGURES 7a-7d sont des exemples de réalisation non limitatifs d'un dispositif de stockage d'énergie électrique par effet capacitif.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

Dans les exemples suivants, mais de manière nullement limitative pour l'invention, on considère que tous les dispositifs de stockage $DC_i$ sont identiques et ont la même tension d'équilibrage $V_{eq}$. Bien entendu, l'invention n'est pas limitée à ces exemples et il est possible d'utiliser des dispositifs de stockage $DC_i$ qui sont différents les uns des autres et qui ne présentent pas la même tension d'équilibrage.

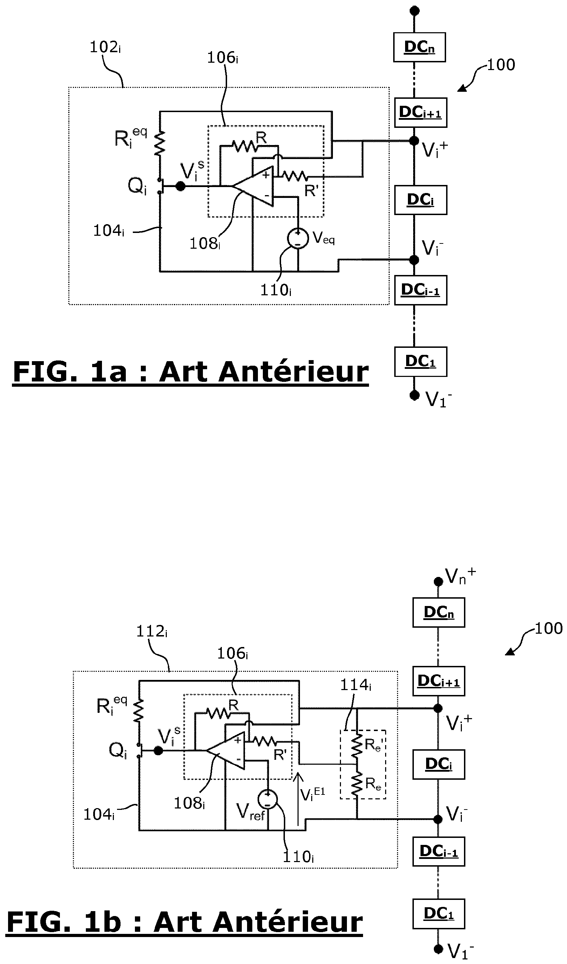

Les FIGURES 1a et 1b sont des représentations des schémas électriques de principe de deux exemples de système d'équilibrage à résistance commandée selon l'état de la technique.

Sur les FIGURES 1a et 1b est représenté un ensemble de stockage 100 comprenant n dispositifs de stockage par effet capacitif $DC_1$, ..., $DC_n$ reliés entre eux en série et identiques. Le dispositif de stockage $DC_1$ se trouve du côté du plus petit potentiel électrique, noté $V_1^-$, de l'ensemble de stockage 100 et le dispositif de stockage $DC_n$ se trouve du côté du plus grand potentiel électrique, noté $V_n^+$, de l'ensemble de stockage 100. La tension aux bornes du dispositif de stockage $DC_i$ est noté $V_i$, et la tension aux bornes de l'ensemble de stockage 100 est notée V.

Le système représenté sur les FIGURES 1a et 1b comprend un dispositif d'équilibrage à résistance commandée associé à chaque dispositif de stockage $DC_i$.

Dans la suite, pour ne pas alourdir les schémas, seul le dispositif d'équilibrage $102_i$, associé au dispositif de stockage $DC_i$, est représenté sur les FIGURES 1a et 1b. Les dispositifs d'équilibrage des autres dispositifs de stockage de l'ensemble de stockage 100 sont sur le même principe que le dispositif d'équilibrage $102_i$, représenté sur les FIGURES 1a et 1b, et en particulier identiques au dispositif d'équilibrage $102_i$ dans le cas où les dispositifs de stockage $DC_i$ présentent une même tension d'équilibrage $V_{eq}$.

Le dispositif d'équilibrage $102_i$ comprend un circuit de dérivation $104_i$, relié en parallèle aux bornes du dispositif de stockage $DC_1$, et comportant un commutateur $Q_i$ en série avec une résistance d'équilibrage $R_i^{eq}$.

Le dispositif d'équilibrage $102_i$ comprend également un comparateur à hystérésis $106_i$, dit premier comparateur, pour commander l'état du commutateur $Q_i$. Le premier comparateur $106_i$ est formé par un amplificateur opérationnel $108_i$ et deux résistances R et R' dont les valeurs fixent la largeur de l'hystérésis. Les résistances R et R' sont choisies suffisamment grandes pour que le courant qui les traverse soit négligeable, typiquement R > 10 kΩ et R' > 10 kΩ.

L'amplificateur opérationnel $108_i$ est référencé aux potentiels, $V_i^+$ et $V_i^-$, aux bornes du dispositif de stockage $DC_i$ auquel est associé le dispositif d'équilibrage $102_i$.

Dans l'exemple représenté sur la FIGURE 1a, l'entrée positive (+) de l'amplificateur opérationnel $108_i$ est reliée au plus grand potentiel $V_i^+$ aux bornes du dispositif de stockage $DC_i$ auquel est associé le dispositif d'équilibrage $102_i$. L'entrée négative (-) de l'amplificateur opérationnel $108_i$ est reliée à une source de tension $110_i$, elle-même référencée au plus petit potentiel $V_i^-$ aux bornes du dispositif de stockage $DC_i$.

Dans l'exemple représenté sur la FIGURE 1a, la source de tension $110_i$ fournit la tension d'équilibrage $V_{eq}$ à laquelle on souhaite dériver le dispositif de stockage $DC_i$.

Dans ce cas, le comparateur $106_i$ compare directement la tension $V_i$ aux bornes du dispositif de stockage $DC_i$ à la tension d'équilibrage $V_{eq}$, et fonctionne de la manière suivante :

- si $V_i$ (=$V_i^+$-$V_i^-$) < $V_{eq}$ alors la tension fournie par le premier comparateur $106_i$, notée $V_i^s$, est égale à $V_i^-$ (= -$V_{sat}$ local) : autrement dit, si la tension $V_i$ aux bornes du dispositif de stockage $DC_i$ est inférieure à la tension d'équilibrage $V_{eq}$ alors $V_i^s = V_i^-$ ; et
- si $V_i$ (=$V_i^+$-$V_i^-$) ≥ $V_{eq}$ alors $V_i^s=V_i^+$ (= +$V_{sat}$ local).

La tension $V_i^s$ est utilisée pour commander le commutateur $Q_i$ dans un état fermé ou dans un état ouvert.

Dans l'exemple représenté sur la FIGURE 1a, le commutateur $Q_i$ peut être un transistor MOSFET à canal N dont la grille reçoit la tension $V_i^s$ :

- lorsque $V_i^s$ vaut $V_i^-$ (c'est-à-dire lorsque la tension $V_i$ aux bornes du dispositif de stockage $DC_i$ est inférieure à la tension d'équilibrage $V_{eq}$) alors la tension Grille-Source est nulle et le commutateur $Q_i$ est bloqué/ouvert : le circuit de dérivation $104_i$ est ouvert et ne conduit aucun courant ; et
- lorsque $V_i^s$ vaut $V_i^+$ (c'est-à-dire lorsque la tension $V_i$ aux bornes du dispositif de stockage $DC_i$ est supérieure ou égale à la tension d'équilibrage $V_{eq}$) alors la tension Grille-Source est non nulle et le commutateur $Q_i$ est passant/fermé : le circuit de dérivation $104_i$ est fermé et conduit du courant qui passe dans la résistance d'équilibrage $R_i^{eq}$.

La FIGURE 1b donne un autre exemple de réalisation d'un dispositif d'équilibrage à résistance commandée. Le dispositif d'équilibrage $112_i$, de la FIGURE 1b, comprend un diviseur de tension $114_i$, disposé en dérivation aux bornes du dispositif de stockage $DC_i$ et formé par des résistances $R_e$ et $R_e$'. Le diviseur de tension $114_i$ est utilisé pour adapter la tension $V_i$ ($V_i = V_i^+ - V_i^-$), aux bornes du dispositif de stockage $DC_i$. En effet, d'un point de vue pratique, les sources de tension en électronique analogique ont des valeurs déterminées et fixes. Elles ne correspondent donc pas nécessairement à la valeur de la tension d'équilibrage souhaitée $V_{eq}$ pour le dispositif de stockage $DC_i$. Ainsi, le comparateur $106_i$ reçoit en entrée, non pas la tension $V_i$, mais une tension d'entrée $V_i^{E1}$ telle que $V_i^{E1} = V_i/D^1$, avec $D^1$ le coefficient de division appliqué par le diviseur de tension $114_i$ tel que :

$$D^1 = \frac{R_e + R'_e}{R_e}$$

Dans ce cas, la source $110_i$ fournit, non pas la tension d'équilibrage $V_{eq}$, mais une tension de référence, notée $V_{ref}$, telle que $V_{ref} = V_{eq}/D^1$.

Autrement dit, on a :

$$\frac{R_e}{R_e + R_e'} = \frac{V_{ref}}{V_{eq}}$$

Autrement dit, dans l'exemple de réalisation représenté $V_{ref} \neq V_{eq}$, et

$$V_{ref} = V_{eq} \left( \frac{R_e}{R_e + R_e'} \right)$$

Le dispositif d'équilibrage $112_i$, représenté sur la FIGURE 1b, comprend par ailleurs tous les éléments du dispositif d'équilibrage $102_i$ de la FIGURE 1a.

A la différence du dispositif $102_i$ de la FIGURE 1a, dans le dispositif $112_i$ de la FIGURE 1b, l'entrée positive (+) de l'amplificateur opérationnel $108_i$ est reliée audit diviseur de tension $114_i$ Les résistances $R_e$ et $R_e$, formant le diviseur de tension, sont choisies suffisamment grandes pour que le courant qui les traverse soit négligeable, typiquement $R_e > 10$ kΩ et $R_e' > 10$ kΩ.

Dans ce cas, le comparateur de tension $106_i$ réalise une comparaison :

- de la tension de référence $V_{ref}$ (et non pas de la tension $V_{eq}$)
- à la tension d'entrée $V_i^{E1}$, fournie par le diviseur de tension $114_i$.

Dans les exemples décrits, le comparateur $106_i$ est un comparateur à hystérésis. Alternativement, le comparateur $106_i$ peut ne pas être un comparateur à hystérésis.

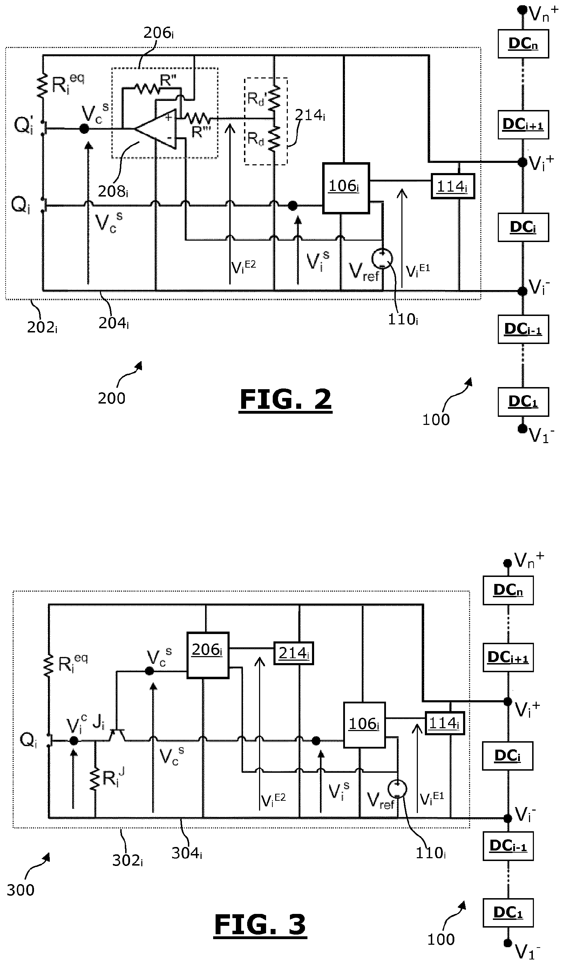

La FIGURE 2 est une représentation du schéma de principe d'un premier exemple de réalisation non limitatif d'un système d'équilibrage selon l'invention.

Le système d'équilibrage 200, de la FIGURE 2, comprend pour chaque dispositif de stockage $DC_1$, ..., $DC_n$, un dispositif d'équilibrage à résistance commandée identique car les dispositifs de stockage $DC_1$, ..., $DC_n$ sont identiques.

Pour ne pas alourdir le schéma, seul le dispositif d'équilibrage $202_i$, associé au dispositif de stockage $DC_i$, est représenté sur la FIGURE 2.

Le dispositif d'équilibrage $202_i$ comprend un circuit de dérivation $204_i$ du dispositif de stockage $DC_i$ comprenant la résistance d'équilibrage $R_i^{eq}$ en série avec le commutateur $Q_i$. Le circuit de dérivation $204_i$ comprend en plus un

deuxième commutateur $Q_i$', en série avec le premier commutateur $Q_i$.

De la même manière que dans le dispositif d'équilibrage $112_i$ de la FIGURE 1b, le premier commutateur $Q_i$ est commandé par la tension $V_i^s$ fournie par le comparateur $106_i$, avec utilisation du diviseur de tension $114_i$.

Le commutateur $Q_i$ est un commutateur se trouvant dans un état ouvert/bloqué tant que la tension aux bornes du dispositif de stockage $DC_i$ n'a pas atteint la tension d'équilibrage $V_{eq}$, et fermé/passant sinon.

Dans le système 200 de la FIGURE 2, chaque dispositif d'équilibrage $202_i$ comprend en outre un deuxième commutateur $Q_i$', en série avec le premier commutateur $Q_i$ et la résistance d'équilibrage $R_i^{eq}$. Le commutateur $Q_i$' est choisi et est commandé de sorte qu'il reste fermé/passant tant que la tension $V_i$ aux bornes dispositif de stockage $DC_i$ n'a pas atteint une tension de décommutation, notée $V_{dec}$, prédéterminée, supérieure à la tension d'équilibrage $V_{eq}$, et ouvert/bloqué sinon.

Chaque dispositif d'équilibrage $202_i$ comprend en outre un deuxième comparateur de tension $206_i$ pour commander le commutateur $Q_i$'. Le comparateur $206_i$ est un comparateur à hystérésis. En particulier, le deuxième comparateur $206_i$ est formé par un amplificateur opérationnel $208_i$ et deux résistances R" et R''' dont les valeurs fixent la largeur de l'hystérésis. Les résistances R" et R''' sont choisies suffisamment grandes pour que le courant qui les traverse soit négligeable, typiquement R" > 10 kΩ et R''' > 10 kΩ.

L'amplificateur opérationnel $208_i$ est référencé aux potentiels $V_i^+$ et $V_i^-$, aux bornes du dispositif de stockage $DC_i$ auquel est associé le dispositif d'équilibrage $202_i$.

Dans l'exemple représenté sur la FIGURE 2, l'entrée positive (+) de l'amplificateur opérationnel $208_i$ reçoit une tension d'entrée, notée $V_i^{E2}$, proportionnelle à la tension aux bornes du dispositif de stockage $DC_i$ par un diviseur de tension $214_i$, formé par des résistances $R_d$ et $R_d$'. L'entrée négative (-) de l'amplificateur opérationnel $208_i$ est reliée à la source de tension $110_i$, fournissant la tension de référence $V_{ref}$, elle-même référencée au plus petit potentiel, noté $V_i^-$, aux bornes du dispositif de stockage $DC_i$.

Par conséquent, le deuxième diviseur de tension $214_i$ fournit une tension $V_1^{E2}$ telle que $V_i^{E2}=V_i/D^2$, avec $D^2$ le coefficient de division appliqué par le diviseur de tension $214_i$, tel que :

$$D^2 = \frac{R_d + R_d'}{R_d}$$

Le diviseur de tension $214_i$ doit être dimensionné pour que le coefficient $D^2$ vérifie la relation suivante :

$$D^2 = \frac{V_{dec}}{V_{ref}}$$

Dans ce cas, le deuxième comparateur de tension $206_i$ réalise une comparaison :

- de la tension de référence $V_{ref}$ délivrée par la source $110_i$,
- à la deuxième tension d'entrée, $V_i^{E2}$, fournie par le diviseur de tension $214_i$.

Ainsi, dans l'exemple de réalisation représenté sur la FIGURE 2, les tensions de référence utilisées par les deux comparateurs $106_i$ et $206_i$ sont identiques. Cependant, pour une tension donnée aux bornes du dispositif de stockage $DC_i$, la tension d'entrée $V_i^{E1}$ utilisée par le premier comparateur $106_i$ pour la comparaison avec la tension de référence $V_{ref}$ est supérieure à celle $V_1^{E2}$ utilisée par le deuxième comparateur $206_i$. Ainsi, le niveau de décommutation $V_{dec}$ du commutateur $Q_i$' est supérieur au niveau de commutation $V_{eq}$ du commutateur $Q_i$.

Le deuxième comparateur $206_i$ fonctionne de la manière suivante :

- si la deuxième tension d'entrée $V_i^{E2}<V_{ref}$, cela veut dire que $V_i<V_{dec}$ : dans ce cas la tension fournie par le deuxième comparateur $206_i$, notée $V_c^s$, est égale à $V_i^-$ (= $-V_{sat}$ local) ; et
- si la deuxième tension d'entrée $V_i^{E2} \geq V_{ref}$, cela veut dire que $V_i \geq V_{dec}$ : dans ce cas la tension $V_c^s$ fournie par le deuxième comparateur $206_i$ est égale à $V_i^+$ (= $+V_{sat}$ local).

Dans ces conditions, le commutateur $Q_i$' peut être un transistor MOSFET à canal P dont la grille reçoit la tension $V_c^s$ :

- lorsque $V_c^s$ vaut $V_i^-$, cela veut dire que la tension $V_i$ n'a pas atteint la tension de décommutation $V_{dec}$, alors la tension Grille-Source est nulle et le commutateur $Q_i$' est fermé/passant : le circuit de dérivation $204_i$ est passant : le dispositif de stockage $DC_i$ est dérivé en fonction de l'état du commutateur $Q_i$ ; et

- lorsque $V_c{}^s$ vaut $V_i{}^+$, cela veut dire que la tension $V_i$ a atteint la tension de décommutation $V_{dec}$, alors la tension Grille-Source est positive et par conséquent le commutateur $Q_i$' est bloqué/ouvert : le circuit de dérivation $204_i$ est ouvert, quel que soit l'état du commutateur $Q_i$, et ne conduit pas de courant : le dispositif de stockage $DC_i$ n'est pas dérivé.

La FIGURE 3 est une représentation du schéma de principe d'un deuxième exemple de réalisation non limitatif d'un système d'équilibrage selon l'invention.

Le système d'équilibrage 300, de la FIGURE 3, comprend le premier comparateur $106_i$ et le deuxième comparateur $206_i$ du système 200 de la FIGURE 2.

Le système d'équilibrage 300 comprend en outre pour chaque dispositif de stockage $DC_1$, ..., $DC_n$, un dispositif d'équilibrage actif à résistance commandée identique.

Pour ne pas alourdir le schéma, seul le dispositif d'équilibrage $302_i$, associé au dispositif de stockage $DC_i$, est représenté sur la FIGURE 3.

Le dispositif d'équilibrage $302_i$ comprend un circuit de dérivation $304_i$ du dispositif de stockage $DC_i$ comprenant la résistance d'équilibrage $R_i{}^{eq}$ en série avec un unique commutateur, à savoir le commutateur $Q_i$. Dans le système 300, le commutateur $Q_i$ est commandé en fonction à la fois de la tension $V_i{}^s$ fournie par le premier comparateur $106_i$ et de la tension $V_c{}^s$ fournie par le deuxième comparateur $206_i$.

Pour ce faire, le dispositif d'équilibrage $302_i$ comprend un moyen de commande recevant d'une part la tension $V_i{}^s$ fournie par le premier comparateur $106_i$ et d'autre part la tension $V_c{}^s$ fournie par le deuxième comparateur $206_i$. En particulier, le moyen de commande est un transistor bipolaire, notée $J_i$, tel qu'un transistor bipolaire PNP fermé/passant par défaut, et monté de sorte que :

- la base du transistor $J_i$ reçoit la tension $V_c{}^s$,
- le collecteur du transistor $J_i$ reçoit la tension $V_i{}^s$, et
- l'émetteur du transistor $J_i$ commande le commutateur $Q_i$, par une tension de commande notée $V_i{}^c$.

Tel que décrit plus haut, le commutateur $Q_i$ peut être un transistor MOSFET à canal N.

Dans ces conditions, le commutateur $Q_i$ du circuit de dérivation $304_i$ est commandé de la manière suivante :

- si la tension $V_i$ aux bornes du dispositif de stockage $DC_i$ n'a pas atteint la tension d'équilibrage $V_{eq}$, alors $V_i{}^s=V_i{}^-$ et $V_c{}^s=V_i{}^-$. Par conséquent, le transistor bipolaire $J_i$ est passant/fermé et la tension $V_i{}^-$ arrive au commutateur $Q_i$ qui est alors bloqué/ouvert : le circuit de dérivation $304_i$ ne laisse pas passer le courant ;
- si la tension $V_i$ aux bornes du dispositif de stockage $DC_i$ a atteint la tension d'équilibrage $V_{eq}$, mais pas la tension de décommutation $V_{dec}$, alors $V_i{}^s=V_i{}^+$ et $V_c{}^s=V_i{}^-$. Par conséquent, le transistor bipolaire $J_i$ est passant et la tension $V_i{}^+$ arrive au commutateur $Q_i$ qui est alors passant/fermé : le circuit de dérivation $304_i$ laisse passer le courant et le dispositif de stockage $DC_i$ est dérivé ; et
- si la tension $V_i$ aux bornes du dispositif de stockage $DC_i$ a atteint la tension de décommutation $V_{dec}$, alors $V_i{}^s=V_i{}^+$ et $V_c{}^s=V_i{}^+$. Par conséquent, le transistor bipolaire $J_i$ est bloqué et la tension $V_i{}^-$ arrive au commutateur $Q_i$ par une résistance $R_i{}^j$ reliant la grille du commutateur $Q_i$ au potentiel $V_i{}^-$. Le commutateur $Q_i$ est alors bloqué/fermé : le circuit de dérivation $304_i$ est ouvert et ne laisse pas passer le courant.

Alternativement à ce qui est décrit sur les FIGURES 2 et 3, il est possible d'utiliser un deuxième comparateur qui n'est pas un comparateur à hystérésis.

Il est également possible d'utiliser une source de tension individuelle pour chaque comparateur. Les sources de tension individuelles peuvent fournir une même tension de référence ou des tensions de référence différentes.

Suivant une autre alternative, il est possible d'utiliser un deuxième comparateur qui est un comparateur inverseur. Dans ce cas, le deuxième commutateur $Q_i$' peut être par exemple un transistor MOSFET à canal N et le moyen de commande $J_i$ peut être un transistor bipolaire NPN.

Suivant une autre alternative, il est possible de ne pas utiliser de diviseur de tension pour le premier comparateur, comme montré sur la FIGURE 1a. Dans ce cas, le premier comparateur reçoit en entrée et compare entre elles :

- la tension $V_i$ aux bornes du dispositif de stockage $DC_i$, et
- la tension d'équilibrage $V_{eq}$.

Alternativement ou en plus, il est possible de ne pas utiliser de diviseur de tension pour le deuxième comparateur. Dans ce cas, le deuxième comparateur reçoit en entrée et compare entre elles :

- la tension $V_i$ aux bornes du dispositif de stockage $DC_i$, et

- la tension de décommutation $V_{dec}$.

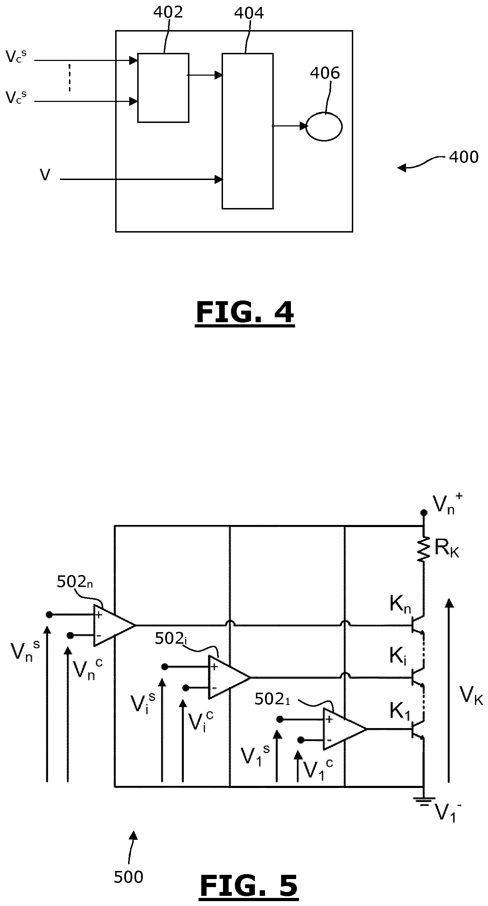

La FIGURE 4 est une représentation schématique d'un exemple de réalisation d'un module de surveillance pouvant être mis en œuvre dans le système selon l'invention, et en particulier dans le système 200 de la FIGURE 2.

Le module de surveillance 400, représenté sur la FIGURE 4, prend en entrée, pour chaque dispositif d'équilibrage $202_i$, la tension de commande $V_c{}^s$ fournie par le deuxième comparateur $206_i$ et la tension $V_i$.

Pour rappel, chaque tension $V_c{}^s = V_i{}^-$ lorsque le circuit de dérivation n'a pas été décommuté, et $V_c{}^s = V_i{}^+$ dans le cas contraire.

Le module de surveillance 400 comprend un sommateur pondéré 402 réalisant une sommation pondérée de tous les $V_c{}^s$.

Le module de surveillance 400 reçoit également la tension V aux bornes de l'ensemble de stockage ($V=V_n{}^+-V_1{}^-$).

Le module de surveillance 400 comprend en outre un comparateur de tension 404 comparant la tension de somme pondérée fourni par le sommateur pondéré 402 à la tension V aux bornes de l'ensemble de stockage.

Tant que tous les circuits de dérivation n'ont pas été tous décommutés, la tension fournie par le sommateur 402 sera inférieure à la tension V aux bornes de l'ensemble de stockage. Lorsque tous les circuits de dérivation sont décommutés, la tension fournie par le sommateur 402 sera égale à la tension V aux bornes de l'ensemble de stockage.

La sortie du comparateur 404 peut être utilisée pour signaler le résultat de la comparaison, par exemple à l'aide d'un voyant lumineux 406 alimenté par la sortie du comparateur 404.

Le comparateur 404 peut être référencé aux potentiels ($V_1{}^-$ et $V_n{}^+$) aux bornes de l'ensemble de stockage 100.

Alternativement, le comparateur 404 peut comparer la tension fournie par le premier sommateur 402 à une tension de seuil $V_{seuil}$ prenant en compte une tension $\delta V$ représentant une marge de sécurité, telle que :

$$V_{seuil}= V-\delta V.$$

Suivant encore une autre alternative, la tension $\delta V$ représentant une marge de sécurité peut être ajoutée à la somme pondérée fournie par le sommateur 402, directement dans ledit sommateur 402, ou par un autre sommateur disposé en cascade avec le sommateur 402.

La tension $\delta V$ représentant une marge de sécurité peut être supérieure ou égale à 50 mV, cette valeur représentant typiquement la précision attendue de l'électronique analogique.

La FIGURE 5 est une représentation schématique d'un autre exemple de réalisation d'un module de surveillance pouvant être mis en œuvre dans le système selon l'invention, et en particulier dans le système 300 de la FIGURE 3.

Le module de surveillance 500 comprend pour chaque dispositif de stockage $DC_i$ un comparateur $502_i$, référencé aux potentiels $V_n{}^+$ et $V_1{}^-$ aux bornes de l'ensemble de stockage 100, et recevant :

- à son entrée positive la tension $V_i{}^s$ fournie par le premier comparateur $106_i$ associé audit dispositif de stockage $DC_1$, et
- à son entrée négative la tension $V_i{}^c$ fournie par le moyen de commande $J_i$ associé audit dispositif de stockage $DC_i$.

Chaque comparateur $502_i$ compare donc les tensions $V_i{}^s$ et $V_i{}^c$ de sorte que si $V_i{}^s \leq V_i{}^c$ la tension de sortie du comparateur vaut $V_1{}^-$, et si $V_i{}^s > V_i{}^c$ la tension de sortie du comparateur vaut $V_n{}^+$.

Chaque comparateur $502_i$ commande un commutateur, noté $K_i$, qui peut être par exemple un transistor bipolaire de type NPN, et qui est ouvert par défaut et qui est fermé lorsque la tension fournie par le comparateur est égale à $V_n{}^+$.

Les commutateurs $K_1, ..., K_n$, commandés respectivement par les comparateurs $502_i, ..., 502_n$, sont reliés en série entre eux et avec une résistance $R_K$, entre les potentiels $V_n{}^+$ et $V_1{}^-$.

Ainsi, lorsqu'il existe au moins un commutateur $K_i$ qui est ouvert alors aucun courant ne passe dans la résistance $R_K$ et la tension $V_K$ à la borne négative de la résistance $R_K$ vaut $V_n{}^+$, ce qui correspond à un état haut (tension non-nulle par rapport à $V_1{}^-$). Lorsque tous les commutateurs $K_i$ sont fermés alors un courant passe par la résistance $R_K$ et la tension $V_K$ à la borne négative de la résistance $R_K$ vaut $V_1{}^-$, ce qui correspond à un état bas (tension nulle par rapport à $V_1{}^-$).

La résistance $R_k$ est une résistance arbitraire de valeur suffisamment grande, par exemple d'une valeur supérieure à 10 k$\Omega$, pour limiter le courant qui traverse l'ensemble des commutateurs $K_1, ..., K_n$.

Cette tension $V_K$ peut être utilisée pour surveiller le fonctionnement du système d'équilibrage, par exemple en allumant un voyant lumineux (non représenté sur la FIGURE 5).

Alternativement, chaque comparateur $502_i$ peut être local au dispositif d'équilibrage $302_i$ de chaque dispositif de stockage $DC_i$.

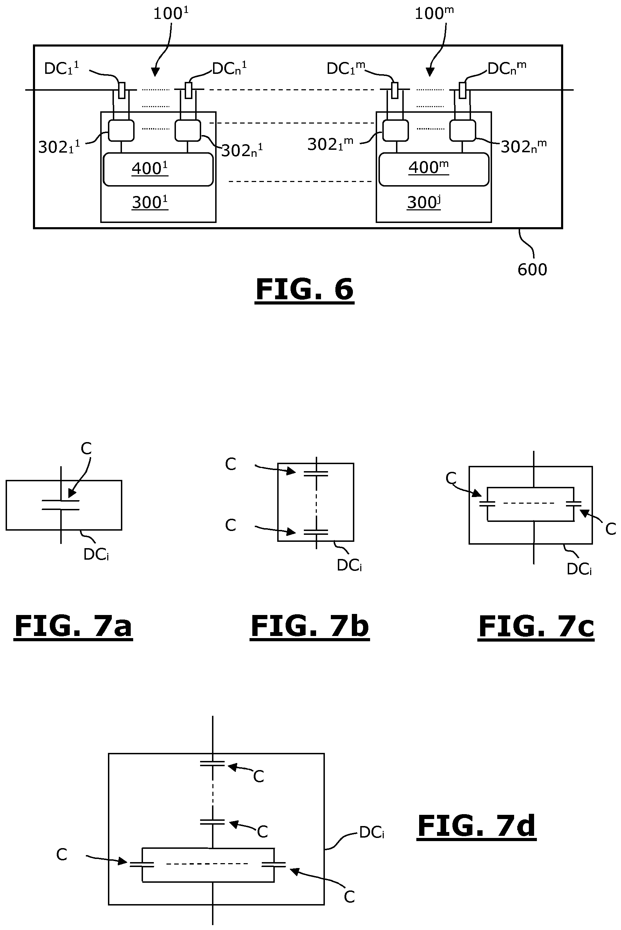

La FIGURE 6 est une représentation schématique d'un exemple de réalisation non limitatif d'un module de stockage selon l'invention.

Le module de stockage 600, représenté sur la FIGURE 6, comprend plusieurs ensembles de stockage $100^1, ..., 100^m$ comprenant, chacun, plusieurs dispositifs de stockage reliés entre eux en série.

Les ensembles $100^1, ..., 100^m$ peuvent être reliés entre eux en série ou en parallèle.

Dans l'exemple représenté, chaque ensemble $100^j$ comprend « n » dispositifs de stockage $DC_1^j$, ..., $DC_n^j$.

A chaque dispositif de stockage $DC_i^j$, $1 \leq i \leq n$ et $1 \leq j \leq m$, est relié un dispositif d'équilibrage $302_i^j$, tel que par exemple le dispositif d'équilibrage $302_i$ de la FIGURE 3.

A chaque ensemble $100^j$ est en outre associé un module de surveillance $400^j$, tel que par exemple le module de surveillance 400 de la FIGURE 4.

Le module de stockage 600 peut être utilisé dans un véhicule de transport électrique, ou hybride, rechargeable, qui peut être un bus, une voiture, un tram-bus, un bateau, un camion, un téléphérique, un monte-charge, une grue, etc.

Le module de stockage 600 peut aussi être utilisé dans une installation électrique qui peut être :

- une station de charge électrique pour véhicules de transport électriques ou hybrides,
- une station d'alimentation électrique d'un bâtiment, d'un complexe ou d'un appareil électrique/électronique de communication, ou
- une station de régulation, de lissage, ou de stockage tampon d'énergie électrique.

Les FIGURES 7a-7d sont des exemples de réalisation non limitatifs d'un dispositif de stockage d'énergie électrique par effet capacitif.

Chaque dispositif de stockage $DC_i$ peut être l'un quelconque des dispositifs de stockage décrits en référence aux FIGURES 7a-7d.

Le dispositif de stockage $DC_i$ représenté sur la FIGURE 7a comprend un unique supercondensateur C. C'est cet exemple de dispositif qui a été considéré dans les exemples décrits plus haut en référence aux FIGURES 1-6.

Bien entendu, l'invention n'est pas limitée à cet exemple.

Par exemple, le dispositif de stockage $DC_i$ représenté sur la FIGURE 7b comprend une pluralité de supercondensateurs C montés en série.

Le dispositif de stockage $DC_i$ représenté sur la FIGURE 7c comprend une pluralité de supercondensateurs C montés en parallèle.

Le dispositif de stockage $DC_i$ représenté sur la FIGURE 7d comprend un groupe d'un ou plusieurs supercondensateurs C montés en série avec un groupe d'au moins deux supercondensateurs montés en parallèle entre eux.

Bien entendu, l'invention n'est pas limitée aux exemples détaillés ci-dessus.

## Revendications

1. Système (200 ; 300) d'équilibrage analogique d'un ensemble (100) de stockage d'énergie électrique rechargeable comprenant une pluralité de dispositifs de stockage par effet capacitif ($DC_i$, ..., $DC_n$) reliés entre eux en série, ledit système (200 ; 300) comprenant, pour chaque dispositif de stockage ($DC_i$), un dispositif d'équilibrage ($202_i$ ; $302_i$) comportant :

   - un circuit de dérivation ($204_i$ ; $304_i$) dudit dispositif de stockage ($DC_i$), commandable entre un état fermé et un état ouvert, et
   - un comparateur de tension ($106_i$), dit premier comparateur, agencé pour commander ledit circuit de dérivation ($204_i$ ; $304_i$), dans un état ouvert ou fermé, en fonction de la tension aux bornes dudit dispositif de stockage ($DC_i$) et d'une tension prédéterminée, dite tension d'équilibrage ($V_{eq}$) ;

   ledit système (200 ; 300) étant **caractérisé en ce qu'**il comprend en outre, pour chaque dispositif de stockage ($DC_i$), un autre comparateur de tension ($206_i$), dit deuxième comparateur, agencé pour commander un état ouvert, ou fermé, du circuit de dérivation ($204_i$ ; $304_i$) dudit dispositif de stockage ($DC_i$), en fonction :

   - de la tension aux bornes dudit dispositif de stockage ($DC_i$), et
   - d'une tension prédéterminée ($V_{dec}$), dite tension de décommutation, représentative d'un état fermé de la majorité des, ou de tous les, circuits de dérivation ($204_i$ ; $304_i$).

2. Système (200 ; 300) selon la revendication précédente, **caractérisé en ce que**, pour au moins un, en particulier chaque, dispositif de stockage ($DC_i$), l'un au moins des premier et deuxième comparateurs ($106_i$, $206_i$) est référencé aux potentiels aux bornes dudit dispositif de stockage ($DC_i$), et est configuré pour fournir en sortie :

   - dans un premier état : le plus petit potentiel ($V_i^-$) aux bornes dudit dispositif de stockage ($DC_i$) ; et
   - dans un deuxième état : le plus grand potentiel ($V_i^+$) aux bornes dudit dispositif de stockage ($DC_i$).

3. Système (200 ; 300) selon l'une quelconque des revendications précédentes, **caractérisé en ce qu'**il comprend, pour au moins un, en particulier chaque, dispositif de stockage ($DC_i$) :

   - un diviseur de tension ($114_i$), dit premier diviseur de tension, fournissant, au premier comparateur ($106_i$), une première tension d'entrée ($V_i^{E1}$) proportionnelle et inférieure à ladite tension aux bornes dudit dispositif de stockage ($DC_i$) ; et/ou
   - un diviseur de tension ($214_i$), dit deuxième diviseur de tension, fournissant, au deuxième comparateur ($206_i$), une deuxième tension d'entrée ($V_i^{E2}$) proportionnelle et inférieure à ladite tension aux bornes dudit dispositif de stockage ($DC_i$).

4. Système (200 ; 300) selon la revendication précédente, **caractérisé en ce que**, pour au moins un dispositif de stockage ($DC_i$), le ou les diviseurs de tension est ou sont dimensionnés de sorte que, les premier et deuxième comparateurs réalisent une comparaison des tensions d'entrées ($V_i^{E1}$, $V_i^{E2}$) à une même tension de référence ($V_{ref}$), en particulier fournie par une même et unique source ($110_i$).

5. Système (200 ; 300) selon l'une quelconque des revendications précédentes, **caractérisé en ce que**, l'un au moins des premier et deuxième comparateurs ($106_i$, $206_i$) est un comparateur à hystérésis.

6. Système (200) selon l'une quelconque des revendications précédentes, **caractérisé en ce qu'**au moins un, en particulier chaque, circuit de dérivation ($204_i$ ; $304_i$) comprend deux commutateurs ($Q_i$, $Q_i'$), en série, l'un ($Q_i$) commandé en fonction de la tension ($V_i^s$) fournie par le premier comparateur ($106_i$) et l'autre ($Q_i'$) commandé en fonction de la tension ($V_c^s$) fournie par le deuxième comparateur ($206_i$).

7. Système (300) selon l'une quelconque des revendications précédentes, **caractérisé en ce qu'**au moins un, en particulier chaque, circuit de dérivation ($304_i$) comprend un unique commutateur ($Q_i$), le dispositif d'équilibrage ($302_i$) comprenant en outre un moyen de commande ($J_i$) dudit unique commutateur ($Q_i$), en fonction des tensions ($V_i^S$, $V_c^s$) fournies par les premier et deuxième comparateurs ($106_i$, $206_i$).

8. Système (300) selon la revendication précédente, **caractérisé en ce que** le moyen de commande ($J_i$) comprend :

   - un transistor bloqué par défaut, par exemple un transistor bipolaire de type NPN, en particulier lorsque le deuxième comparateur ($206_i$) est un comparateur inverseur, ou
   - un transistor passant par défaut, par exemple un transistor bipolaire de type PNP, en particulier lorsque le deuxième comparateur ($206_i$) est un comparateur non-inverseur.

9. Système (200) selon l'une quelconque des revendications précédentes, **caractérisé en ce qu'**il comprend en outre un dispositif (400) de surveillance du fonctionnement dudit système (200 ; 300) en fonction des tensions ($V_c^s$) fournies par les deuxièmes comparateurs ($206_i$) de tous les dispositifs de stockage ($DC_i$).

10. Système (300) selon l'une quelconque des revendications 7 ou 8, **caractérisé en ce qu'**il comprend un dispositif de surveillance (500) du fonctionnement dudit système en fonction des tensions ($V_i^c$) de commande des commutateurs uniques ($Q_i$) de tous les circuits de dérivation ($302_i$).

11. Système (300) selon l'une quelconque des revendications 7 ou 8, **caractérisé en ce qu'**il comprend un dispositif de surveillance (500) du fonctionnement dudit système (300) en fonction :

    - des tensions de commande ($V_i^c$) de tous les commutateurs uniques ($Q_i$), et
    - des tensions fournies ($V_i^s$) par tous les premiers comparateurs ($106_i$).

12. Module (600) de stockage d'énergie électrique rechargeable comprenant :

    - au moins un ensemble de stockage d'énergie électrique rechargeable ($100^1$, ..., $100^m$) comprenant, chacun, une pluralité de dispositifs de stockage d'énergie électrique par effet capacitif reliés entre eux en série au sein dudit ensemble ($100^1$, ..., $100^m$), et
    - pour au moins un, en particulier chaque, ensemble de stockage, un système d'équilibrage ($300^j$) selon l'une quelconque des revendications précédentes.

13. Véhicule de transport électrique ou hybride comprenant un ou plusieurs modules de stockage d'énergie électrique rechargeables (600) selon la revendication précédente.

14. Installation électrique, telle qu'une station de charge électrique pour véhicules de transport électriques ou hybrides, ou une station d'alimentation électrique d'un bâtiment, d'un complexe ou d'un appareil électrique/électronique de communication, ou une station de régulation ou de lissage d'énergie électrique, comprenant un ou plusieurs modules de stockage d'énergie électrique rechargeables (600) selon la revendication 12.

**Patentansprüche**

1. Analoges Ausgleichssystem (200 ; 300) einer wiederaufladbaren Anordnung (100) zur Speicherung von elektrischer Energie, mit einer Vielzahl von Vorrichtungen zur Speicherung mittels kapazitivem Effekt ($DC_1$, ..., $DC_n$), die untereinander in Reihe verbunden sind, wobei das System (200 ; 300) für jede Speichervorrichtung ($DC_i$) eine Ausgleichsvorrichtung ($202_i$; $302_i$) aufweist, umfassend:

   - eine Verzweigungsschaltung ($204_i$; $304_i$) der Speichervorrichtung ($DC_i$), die zwischen einem geschlossenen Zustand und einem offenen Zustand steuerbar ist, und
   - einen Spannungskomparator ($106_i$), sogenannten ersten Komparator, der dazu eingerichtet ist, die Verzweigungsschaltung ($204_i$; $304_i$) in einem offenen oder geschlossenen Zustand in Abhängigkeit von der Spannung an den Anschlüssen der Speichervorrichtung ($DC_i$) und einer vorbestimmten Spannung, sogenannten Ausgleichsspannung ($V_{eq}$), zu steuern,

   wobei das System (200 ; 300) **dadurch gekennzeichnet ist, dass** es ferner für jede Speichervorrichtung ($DC_i$) einen weiteren Spannungskomparator ($206_i$), sogenannten zweiten Komparator umfasst, der dazu eingerichtet ist, einen offenen, oder geschlossenen, Zustand der Verzweigungsschaltung ($204_i$; $304_i$) der Speichervorrichtung ($DC_i$) in Abhängigkeit von:

   - der Spannung an den Anschlüssen der Speichervorrichtung ($DC_i$) und von
   - einer vorbestimmten Spannung ($V_{dec}$), sogenannten Dekommutationsspannung, die für einen geschlossenen Zustand der Mehrheit der oder aller Verzweigungsschaltungen ($204_i$; $304_i$) repräsentativ ist, zu steuern.

2. System (200 ; 300) nach dem vorhergehenden Anspruch, **dadurch gekennzeichnet, dass** für wenigstens eine, insbesondere jede Speichervorrichtung ($DC_i$) wenigstens einer der ersten und zweiten Komparatoren ($106_i$, $206_i$) auf die Potentiale an den Anschlüssen der Speichervorrichtung ($DC_i$) bezogen und dazu ausgelegt ist, folgendes ausgangsseitig bereitzustellen:

   - in einem ersten Zustand: das kleinste Potential ($V_i^-$) an den Anschlüssen der Speichervorrichtung ($DC_i$); und
   - in einem zweiten Zustand: das größte Potential ($V_i^+$) an den Anschlüssen der Speichervorrichtung ($DC_i$).

3. System (200 ; 300) nach einem der vorhergehenden Ansprüche, **dadurch gekennzeichnet, dass** es für wenigstens eine, insbesondere jede Speichervorrichtung ($DC_i$) folgendes umfasst:

   - einen Spannungsteiler ($114_i$), sogenannten ersten Spannungsteiler, der dem ersten Komparator ($106_i$) eine erste Eingangsspannung ($V_i^{E1}$) bereitstellt, die proportional zu der und kleiner als die Spannung an den Anschlüssen der Speichervorrichtung ($DC_i$) ist; und/oder
   - einen Spannungsteiler ($214_i$), sogenannten zweiten Spannungsteiler, der dem zweiten Komparator ($206_i$) eine zweite Eingangsspannung ($V_i^{E2}$) bereitstellt, die proportional zu der und kleiner als die Spannung an den Anschlüssen der Speichervorrichtung ($DC_i$) ist.

4. System (200 ; 300) nach dem vorhergehenden Anspruch, **dadurch gekennzeichnet, dass** für wenigstens eine Speichervorrichtung ($DC_i$) der oder die Spannungsteiler so dimensioniert ist oder sind, dass der erste und der zweite Komparator einen Vergleich der Eingangsspannungen ($V_i^{E1}$, $V_i^{E2}$) mit einer gleichen Referenzspannung ($V_{ref}$), die insbesondere durch ein und dieselbe Einzelquelle ($110_i$) geliefert wird, durchführen.

5. System (200 ; 300) nach einem der vorhergehenden Ansprüche, **dadurch gekennzeichnet, dass** wenigstens einer der ersten und zweiten Komparatoren ($106_i$, $206_i$) ein Komparator mit Hysterese ist.

6. System (200) nach einem der vorhergehenden Ansprüche, **dadurch gekennzeichnet, dass** wenigstens eine, ins-

besondere jede Verzweigungsschaltung (204$_i$; 304$_i$) zwei in Reihe geschaltete Schalter (Q$_i$, Q$_i$') umfasst, wobei der eine (Q$_i$) in Abhängigkeit von der Spannung (V$_i$$^s$), die durch den ersten Komparator (106$_i$) geliefert wird, gesteuert wird und der andere (Q$_i$') in Abhängigkeit von der Spannung (V$_c$$^s$), die durch den zweiten Komparator (206$_i$) geliefert wird, gesteuert wird.

7. System (300) nach einem der vorhergehenden Ansprüche, **dadurch gekennzeichnet, dass** wenigstens eine, insbesondere jede Verzweigungsschaltung (304$_i$) einen Einzelschalter (Q$_i$) aufweist, wobei die Ausgleichsvorrichtung (302$_i$) ferner ein Mitteln zum Steuern (J$_i$) des Einzelschalters (Q$_i$) in Abhängigkeit von den Spannungen (V$_i$$^s$, V$_c$$^s$), die durch den ersten und den zweiten Komparator (106$_i$, 206$_i$) geliefert werden, umfasst.

8. System (300) nach dem vorhergehenden Anspruch, **dadurch gekennzeichnet, dass** das Steuermittel (J$_i$) umfasst:

   - einen standardmäßig gesperrten Transistor, beispielsweise einen Bipolartransistor vom NPN-Typ, insbesondere wenn der zweite Komparator (206$_i$) ein invertierender Komparator ist, oder
   - einen standardmäßig durchlassenden Transistor, beispielsweise einen Bipolartransistor vom PNP-Typ, insbesondere wenn der zweite Komparator (206$_i$) ein nicht-invertierender Komparator ist.

9. System (200) nach einem der vorhergehenden Ansprüche, **dadurch gekennzeichnet, dass** es ferner eine Vorrichtung (400) zum Überwachen des Betriebs des Systems (200 ; 300) in Abhängigkeit von den Spannungen (V$_c$$^s$), die durch die zweiten Komparatoren (206$_i$) aller Speichervorrichtungen (DC$_i$) geliefert werden, umfasst.

10. System (300) nach einem der Ansprüche 7 oder 8, **dadurch gekennzeichnet, dass** es eine Vorrichtung (500) zum Überwachen des Betriebs des Systems in Abhängigkeit von den Steuerspannungen (V$_i$$^c$) der Einzelschalter (Q$_i$) aller Verzweigungsschaltungen (302$_i$) umfasst.

11. System (300) nach einem der Ansprüche 7 oder 8, **dadurch gekennzeichnet, dass** es eine Vorrichtung (500) zum Überwachen des Betriebs des Systems (300) in Abhängigkeit von:

   - den Steuerspannungen (V$_i$$^c$) aller Einzelschalter (Q$_i$) und von
   - den Spannungen (V$_i$$^s$), die durch alle ersten Komparatoren (106$_i$) geliefert werden, umfasst.

12. Wiederaufladbares Modul (600) zur Speicherung von elektrischer Energie, umfassend:

   - wenigstens eine wiederaufladbare Anordnung zur Speicherung von elektrischer Energie (100$^1$, ..., 100$^m$), die jeweils eine Vielzahl von Vorrichtungen zur Speicherung von elektrischer Energie mittels kapazitivem Effekt umfasst, welche innerhalb der Anordnung (100$^1$, ..., 100$^m$) in Reihe verbunden sind, und
   - für wenigstens eine, insbesondere jede Speicheranordnung, ein Ausgleichssystem (300$^j$) nach einem der vorhergehenden Ansprüche.

13. Elektro- oder Hybridtransportfahrzeug, das ein oder mehrere wiederaufladbare Module (600) zur Speicherung von elektrischer Energie nach dem vorhergehenden Anspruch umfasst.

14. Elektrische Anlage, wie eine elektrische Ladestation für Elektro- oder Hybridtransportfahrzeuge, oder eine Stromversorgungsstation eines Gebäudes, eines Komplexes oder eines elektrischen/elektronischen Kommunikationsgeräts oder einer Station zur Stromregelung oder -glättung, umfassend ein oder mehrere wiederaufladbare(s) Modul(e) (600) zur Speicherung von elektrischer Energie nach Anspruch 12.

**Claims**

1. An analogue system (200;300) for balancing a rechargeable electrical energy storage assembly (100) comprising a plurality of capacitive-effect storage devices (DC$_1$, ..., DC$_n$) connected to one another in series, said system (200;300) comprising, for each storage device (DC$_i$), a balancing device (202$_i$;302$_i$) including:

   - a bypass circuit (204$_i$; 304$_i$) for said storage device (DC$_i$), able to be controlled between a closed state and an open state, and
   - a voltage comparator (106$_i$), called first comparator, arranged to control said bypass circuit (204$_i$; 304$_i$) into an open or closed state depending on the voltage at the terminals of said storage device (DC$_i$) and on a

predetermined voltage, called balancing voltage ($V_{eq}$);

said system (200;300) being **characterized in that** it further comprises, for each storage device ($DC_i$), another voltage comparator ($206_i$), called second comparator, designed to control an open or closed state of the bypass circuit ($204_i$; $304_i$) for said storage device ($DC_i$) depending:

- on the voltage on the terminals of said storage device ($DC_i$), and
- on a predetermined voltage ($V_{dec}$), called switch-off voltage, representative of a closed state of the majority, or of all, of the bypass circuits ($204_i$; $304_i$).

2. The system (200;300) according to the preceding claim, **characterized in that**, for at least one, in particular each, storage device ($DC_i$), at least one of the first and second comparators (106i,206i) is referenced to the potentials on the terminals of said storage device ($DC_i$), and is configured to supply, as output:

- in a first state: the smallest potential ($V_i^-$) on the terminals of said storage device ($DC_i$); and
- in a second state: the greatest potential ($V_i^+$) on the terminals of said storage device ($DC_i$).

3. The system (200;300) according to any one of the preceding claims, **characterized in that** it comprises, for at least one, in particular each, storage device ($DC_i$):

- a voltage divider ($114_i$), called first voltage divider, supplying, to the first comparator ($106_i$), a first input voltage ($V_i^{E1}$) that is proportional to and lower than said voltage on the terminals of said storage device ($DC_i$); and/or
- a voltage divider ($214_i$), called second voltage divider, supplying, to the second comparator ($206_i$), a second input voltage ($V_i^{E2}$) that is proportional to and lower than said voltage across the terminals of said storage device ($DC_i$).

4. The system (200; 300) according to the preceding claim, **characterized in that**, for at least one storage device ($DC_i$), the voltage divider(s) is (are) dimensioned such that the first and second comparators perform a comparison of the input voltages ($V_i^{E1}$, $V_i^{E2}$) at one and the same reference voltage ($V_{ref}$), in particular supplied by one and the same single source ($110_i$).

5. The system (200; 300) according to any one of the preceding claims, **characterized in that** at least one of the first and second comparators ($106_i$, $206_i$) is a hysteresis comparator.

6. The system (200) according to any one of the preceding claims, **characterized in that** at least one, in particular each, bypass circuit ($204_i$; $304_i$) comprises two switches ($Q_i$, $Q_i'$) in series, one ($Q_i$) controlled depending on the voltage ($V_i^s$) supplied by the first comparator ($106_i$) and the other ($Q_i'$) controlled depending on the voltage ($V_c^s$) supplied by the second comparator ($206_i$).

7. The system (300) according to any one of the preceding claims, **characterized in that** at least one, in particular each, bypass circuit ($304_i$) comprises a single switch ($Q_i$), the balancing device ($302_i$) further comprising a means ($J_i$) for controlling said single switch ($Q_i$) depending on the voltages ($V_i^s$, $V_c^s$) supplied by the first and second comparators ($106_i$, $206_i$).

8. The system (300) according to the preceding claim, **characterized in that** the control means ($J_i$) comprises:

- a transistor that is in the blocked state by default, for example an NPN bipolar transistor, in particular when the second comparator ($206_i$) is an inverting comparator, or
- a transistor that is in the on state by default, for example a PNP bipolar transistor, in particular when the second comparator ($206_i$) is a non-inverting comparator.

9. The system (200) according to any one of the preceding claims, **characterized in that** it further comprises a device (400) for monitoring the operation of said system (200; 300) depending on the voltages ($V_c^s$) supplied by the second comparators ($206_i$) of all of the storage devices ($DC_i$).

10. The system (300) according to any one of claims 7 or 8, **characterized in that** it comprises a device (500) for monitoring the operation of said system depending on the control voltages ($V_i^c$) of the single switches ($Q_i$) of all of the bypass circuits ($302_i$).

**11.** The system (300) according to any one of claims 7 or 8, **characterized in that** it comprises a device (500) for monitoring the operation of said system (300) depending on:

- the control voltages ($V_i^c$) of all of the single switches ($Q_i$), and
- the voltages ($V_i^s$) supplied by all of the first comparators ($106_i$).

**12.** A rechargeable electrical energy storage module (600), comprising:

- at least one rechargeable electrical energy storage assembly ($100^1$, ..., $100^m$), each comprising a plurality of capacitive-effect electrical energy storage devices connected to one another in series within said assembly ($100^1$, ..., $100^m$), and
- for at least one, in particular each, storage assembly, a balancing system ($300^j$) according to any one of the preceding claims.

**13.** An electric or hybrid transport vehicle comprising one or more rechargeable electrical energy storage modules (600) according to the preceding claim.

**14.** An electrical installation, such as an electric charging station for electric or hybrid transport vehicles, or a power supply station for a building, for a complex or for an electric/electronic communication device, or a station for regulating or smoothing electrical energy, comprising one or more rechargeable electrical energy storage modules (600) according to claim 12.

**FIG. 1a : Art Antérieur**

**FIG. 1b : Art Antérieur**

**FIG. 2**

200

100

**FIG. 3**

300

100

**FIG. 4**

**FIG. 5**

**FIG. 6**

**FIG. 7a**

**FIG. 7b**

**FIG. 7c**

**FIG. 7d**

**RÉFÉRENCES CITÉES DANS LA DESCRIPTION**

**Documents brevets cités dans la description**

- US 2016036248 A1

- US 2003020435 A1